# FASCICULE DE BREVET EUROPEEN

(11) **EP 1 926 060 B1**
(45) Date de publication et mention de la délivrance du brevet: **24.04.2019**
(21) Numéro de dépôt: 07291368.4
(22) Date de dépôt: 15.11.2007
(51) Int. Cl.: B62H 3/00, B62H 5/20

(54) **Dispositif et procédé de verrouillage de véhicules en libre service**
Vorrichtung und Verfahren zum Verschließen von Selbstbedienungs-Fahrzeugen
Device and method for locking self-service vehicles

(30) Priorité: 24.11.2006 FR 0610297
(43) Date de publication de la demande: 28.05.2008
(73) Titulaire: Tracetel, 78320 La Verriere (FR)
(72) Inventeur: Emery, Jean, 78470 Saint Remy les Chevreuse (FR); Benamara, Raouf, 78610 Le Perray en Yvelines (FR)
(74) Mandataire: Debay, Yves

(56) Documents cités:
- EP-A- 0 875 867
- WO-A-2006/095092
- CA-A- 2 445 323
- FR-A1- 2 803 935
- FR-A1- 2 856 825
- JP-A- 2005 179 997
- US-A- 5 270 681
- US-A- 5 917 407

## Description

La présente invention se rapporte au domaine des dispositifs de verrouillage de véhicule et plus particulièrement au dispositif de verrouillage de véhicule de location en libre service.

L'augmentation de la population des communautés urbaines est allée de paire avec les difficultés de déplacement en automobile dans ces agglomérations. Parallèlement à l'amélioration des transports en commun pour faciliter les déplacements des citadins, l'usage des bicyclettes et autres deux roues a augmenté permettant de réduire les problèmes de pollution et d'embouteillage tout en proposant un moyen de locomotion agréable.

Pour faciliter l'usage de la bicyclette, même de façon ponctuelle, certaines communautés urbaines se sont dotées de parcs à vélos en libre-service. Ces parcs consistent en un ensemble de stations implantées en plusieurs endroits afin de quadriller toute une ville pour former un réseau qui permette d'emprunter une bicyclette à une des stations du réseau puis de l'abandonner à une autre station de ce même réseau. Ces différentes stations sont toutes automatisées au niveau de bornes d'accès et fonctionnent 24 heures par jour. L'emprunt d'un vélo consiste alors simplement en une identification avec composition d'un code confidentiel puis dans le détachement du vélo sélectionné de sa borne d'accès.

Les bornes d'accès où sont stationnés les vélos forment le point le plus important du dispositif. En effet, c'est à ce niveau que se réalise le verrouillage du cycle à la station du réseau, ce qui en fait une cible particulière pour des agressions extérieures.

Il est actuellement connu de proposer des systèmes de stockage de cycles comprenant au moins une borne fixe munie d'un dispositif d'identification d'un cycle, le cycle se trouvant verrouillé à un poste fixe par un dispositif de verrouillage. Ce dispositif de verrouillage situé sur le poste fixe met en jeu un moyen d'accroche destiné à coopérer avec un moyen fixé sur le cycle est décrit dans le brevet FR 2856825, ou encore dans le brevet EP 0 875 867. Cependant, si les systèmes de verrouillage par contact entre l'élément fixe et l'élément embarqué du dispositif permettent de limiter les agressions extérieures, il convient de remarquer que les étapes respectives de verrouillage et déverrouillage du cycle peuvent être complexes pour un néophyte ou un utilisateur occasionnel. En effet, la coopération du dispositif de verrouillage situé sur le poste fixe avec le moyen embarqué sur le cycle impose un positionnement parfaitement défini du moyen embarqué par rapport au dispositif fixe pour que le verrouillage puisse s'opérer. Différents paramètres tels que, par exemple, l'état de la chaussée au niveau de la station de stockage, le gonflement des pneus ou des dégradations du cycle rendent alors le positionnement plus complexe pour permettre le verrouillage du dispositif. La solution proposée par le brevet FR 2856825 permet de s'affranchir partiellement de ce problème avec un dispositif de verrouillage de cycles, où les cycles sont verrouillés sans reposer sur toutes leurs roues. Cependant, une telle solution impose de soulever le cycle lors des étapes respectives de verrouillage et de déverrouillage pour que la coopération entre l'élément embarqué et le poste fixe se réalisent correctement. Cette opération peut alors être difficile pour certaines personnes, et notamment les personnes âgées.

Il est également connu, par la demande de brevet CA 2 445 323 A, un système d'identification de bicyclettes. Une étiquette RFID intégrée dans chaque bicyclette permet une identification du propriétaire, lors d'un scannage de l'étiquette RFID. Une large adoption de ce système permettrait de diminuer le vol de bicyclettes en gênant leur recel et d'accroître le taux de de bicyclettes retrouvées et rendues à leur propriétaire par les forces de l'ordre.

La présente invention a pour objet de palier un ou plusieurs inconvénients de l'art antérieur et notamment de proposer un système permettant respectivement un verrouillage et un déverrouillage facilité de véhicules au niveau de postes fixes, ce système permettant par la même occasion de renseigner sur l'état général du véhicule verrouillé.

Cet objectif est atteint grâce à un système de stockage de véhicules selon la revendication 1. Des variantes du système de stockage de véhicules selon la revendication 1 sont caractérisées par les revendications 2 à 17.

Un autre objectif de l'invention est de proposer un procédé de verrouillage faisant intervenir le système de l'invention.

Cet objectif est atteint par un procédé de verrouillage d'un véhicule sur un poste de verrouillage selon la revendication 15. Des variantes du procédé de verrouillage d'un véhicule sur un poste de verrouillage selon la revendication 15 sont caractérisées dans la revendication 16.

L'invention, avec ses caractéristiques et avantages, ressortira plus clairement à la lecture de la description faite en référence aux dessins annexés dans lesquels :

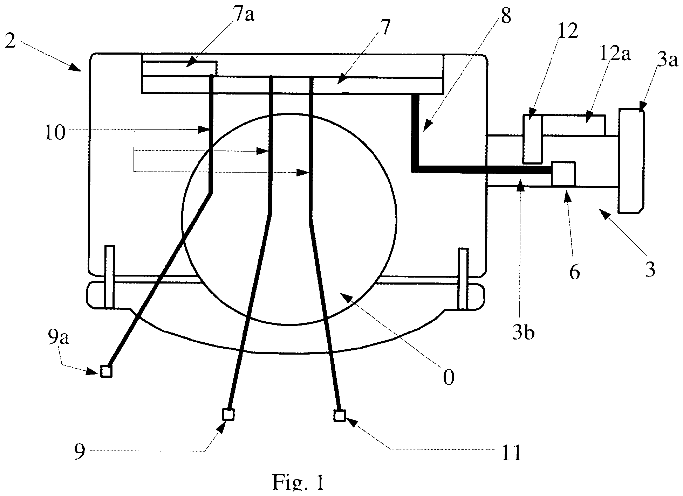

- la figure 1 représente une coupe transversale, schématisée, de l'élément de verrouillage embarqué sur le véhicule.

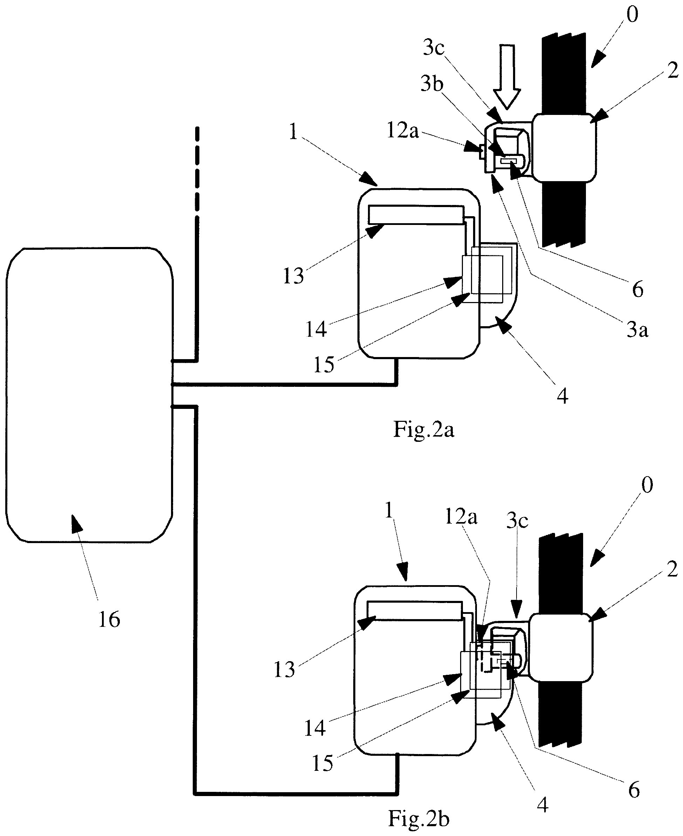

- les figures 2a et 2b représentent une vue de profil, schématisée, de l'introduction de la saillie de l'élément embarqué dans le logement du poste de verrouillage.

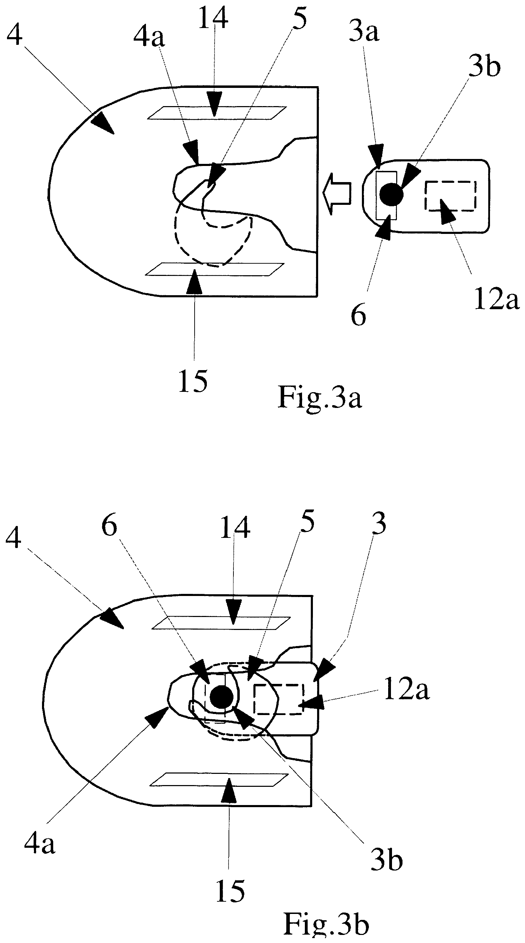

- les figures 3a et 3b représentent une vue de face, schématisée, de l'introduction de la saillie de l'élément embarqué dans le logement du poste de verrouillage.

Le système de stockage de véhicules en libre-service au niveau d'une station de stockage comprend un bloc fonctionnel (16) qui centralise la gestion d'une quinzaine de postes de verrouillage (1) fixe sur lesquels peuvent être verrouillés des véhicules. Ces véhicules sont généralement des cycles, mais peuvent aussi être des cyclomoteurs, des motos, des engins apparentés ou bien encore des caddies. Il convient de remarquer que l'application du système de verrouillage peut aussi s'appliquer à des véhicules situés dans d'autres domaines comme des skis, des bateaux ou encore des planches à voile.

Le verrouillage d'un véhicule (0) nécessite la présence d'un élément de verrouillage (2) embarqué sur le véhicule. Cet élément embarqué (2) de verrouillage est solidarisé ou intégré au véhicule et présente une saillie (3) destinée à coopérer avec le poste fixe (1) de verrouillage. A l'intérieur de cette saillie (3) se trouve intégré une étiquette électronique (6) qui présente un composant RF (Radio Frequency) capable d'être identifié par une antenne reliée à un contrôleur RFID (Radio Frequency Identification) (13). Cette étiquette électronique (6) est reliée à une carte de contrôle électronique (7) située dans le corps de l'élément embarqué (2). La liaison entre l'étiquette (6) et la carte de contrôle (7) traverse la saillie pour rejoindre le corps de l'élément embarqué (2). Cette carte de contrôle (7) centralise la réception d'informations provenant d'au moins un capteur (9) de surveillance de l'état d'un organe du véhicule (0). Généralement, plusieurs capteurs sont reliés à la carte de contrôle (7). Ainsi, la présence d'un capteur (9a) du nombre de tours de roue permet, grâce à un accéléromètre situé au niveau de la carte de contrôle (6) de mesurer la vitesse du véhicule et éventuellement d'afficher cette vitesse avec un moyen d'affichage. Un autre capteur intégré dans la structure de l'élément de verrouillage embarqué (2) permet de vérifier la connexion du câblage entre les composants de l'élément embarqué et donc de vérifier l'intégrité du dispositif en signalant, par le changement d'état d'un registre dans un moyen de mémorisation, toute tentative d'effraction. L'alimentation du dispositif situé sur l'élément de verrouillage embarqué (2) est réalisée par un générateur (11) à faible voltage qui peut être soit une batterie, soit une dynamo. Dans les deux cas, un capteur de fonctionnement du générateur (11) relié à la carte de contrôle (7) permet une surveillance de cette alimentation.

L'étiquette électronique (6) comprend différent registres mémoires. Elle comprend entre autre un registre d'identification du vélo, un signal dans le cas d'une tentative d'effraction altérant le fonctionnement de l'élément embarqué (1) ainsi qu'un registre d'informations permettant de connaître l'état de fonctionnement de différents organes du véhicule.

Le poste fixe (1) de verrouillage est scellé au sol et blindé de sorte que le verrouillage d'un véhicule (0) sur sa structure ne permette pas de déplacer l'ensemble verrouillé. Ce poste fixe (1) comprend ainsi un logement (4) destiné à recevoir la saillie (3) de l'élément embarqué (2), un moyen de verrouillage (5) adapté pour coopérer avec la saillie (3), ainsi qu'un moyen d'actionnement du moyen de verrouillage, ce moyen d'actionnement étant activé et désactivé par un dispositif d'activation. Le poste fixe (1) présente aussi un dispositif de lecture de l'étiquette électronique (6) associée à l'élément de verrouillage embarqué. Ce dispositif comprend une antenne RF relié à un contrôleur de communication RFID (13). L'antenne (14), dite « antenne fixation véhicule » est positionnée dans le poste fixe (1) de façon à former un espace de détection correspondant sensiblement à l'espace formé par le logement (4) destiné à recevoir la saillie (3) de l'élément embarqué (2). Ainsi, lorsque la saillie (4) se positionne dans le logement (4) du poste fixe (1), elle positionne dans le même temps l'étiquette électronique (16) dans l'espace de détection de l'antenne (14), le véhicule est alors identifié. La commande d'actionnement du moyen de verrouillage (5) est alors activée. L'utilisateur qui a positionné le véhicule emprunté peut alors déclencher la commande d'actionnement pour verrouiller l'élément embarqué (2) sur le véhicule (0) au poste fixe (1).

Alors qu'auparavant le verrouillage nécessitait une reconnaissance par un contact précis entre deux parties, la reconnaissance par RF de l'invention permet une plus grande tolérance et donc une facilité d'utilisation.

Selon une variante du mode de réalisation, un câble antivol, souple, hélicoïdal et plastifié, est solidarisé à la structure du véhicule (0) à une de ses extrémités. L'autre extrémité du câble antivol présente un système de verrouillage pouvant coopérer avec l'élément de verrouillage embarqué (2). Un tel câble antivol permet ainsi à l'utilisateur de stationner le véhicule de façon sécurisée hors des stations de stockage. Dans le cas d'un système de verrouillage du câble antivol faisant intervenir une clé (12), cette clé intègre alors dans sa structure un composant RF (12a). Lorsque l'antivol n'est pas utilisé, cette clé (12) se trouve positionnée au niveau de la saillie (3) de l'élément de verrouillage embarqué (2). Dans ce mode de réalisation, le poste fixe (1) est équipé d'une seconde antenne RF (15) relié au contrôleur de communication RFID (13). Cette seconde antenne (15), dite « antenne clé antivol » est, elle aussi, positionnée dans le poste fixe (1) de façon à former un espace de détection correspondant sensiblement à l'espace formé par le logement (4) destiné à recevoir la saillie (3) de l'élément embarqué (2). L'activation de la commande d'actionnement du moyen de verrouillage (5) est alors tributaire de la détection et de l'identification d'une part de l'étiquette électronique (6) par l'« antenne fixation véhicule » (14) et d'autre part de la clé (12) par l'« antenne fixation véhicule » (15). Ce système de détection RF permet ainsi d'éviter que le véhicule soit restitué à une station de stockage sans la clé (12) de l'antivol embarqué sur le véhicule. L'élément de verrouillage embarqué (2) est solidarisé au véhicule et présente une saillie (3) sensiblement rectiligne présentant la forme d'un cylindre. A l'extrémité de cette saillie (3) se trouve une protubérance (3a) dont le diamètre est supérieur à celui du corps (3b) de la saillie (3). Un moyen de renfort (3c) de la saillie (3) peut être ajouté, de sorte que ce moyen de renfort (3c) relie la protubérance (3a) à l'élément de verrouillage embarqué (2) tout en étant positionné à distance de la saillie (2). Le poste fixe (1) de verrouillage, généralement scellé au sol, présente un logement (4) destiné à recevoir la saillie (3) de l'élément embarqué (2) de verrouillage. Ce logement (4) est disposé au niveau de la face du poste fixe (1) situé en regard du véhicule verrouillé. La face du logement (4) située en regard du véhicule fait face à l'élément embarqué (2) de verrouillage. Cette face présente une ouverture formant une gorge (4a) orientée dans un plan parallèle au déplacement du véhicule (0) et dont une extrémité a une largeur sensiblement supérieure au diamètre du corps (3b) de la saillie (3) et inférieure au diamètre de la protubérance (3a). L'autre extrémité de la gorge (4a) s'ouvre sur une seconde face du logement (4), perpendiculaire à la face du logement (4) située en regard du véhicule verrouillé, qui présente une ouverture de largeur supérieur au diamètre de la protubérance (3a). Lors du verrouillage, la saillie (3), orientée selon un axe perpendiculaire au plan de la face du logement (4) située en regard du véhicule à verrouiller, est introduite en réalisant une translation selon un axe parallèle au déplacement du véhicule (0) et appartenant au plan perpendiculaire à l'axe de la saillie (3). La protubérance (3a) est introduite au niveau de la face du logement (4) situé du coté élargie de la gorge (4a), le corps (3b) de la saillie (3) vient alors se trouver enserré dans la gorge (4a). Le verrouillage consiste alors dans le rabattement d'un moyen de verrouillage (5) bloquant la sortie de la saillie (3) du logement (4). Ce moyen de verrouillage est généralement formé par un clapet (5). L'actionnement du moyen de verrouillage (5) est, lui, généralement effectué par un électroaimant dont l'activation dépend de la détection et de l'identification d'une part de l'étiquette électronique (6) par l'« antenne fixation véhicule » (14) et d'autre part de la clé (12) par l'« antenne fixation véhicule » (15).

Une fois que le poste fixe (1) et l'élément embarqué (2) sont verrouillés ensemble, l'étiquette électronique (6) est toujours située dans l'espace de détection de l'« antenne fixation véhicule » (14). Les informations récoltées par l'étiquette électronique (6) au cours de l'utilisation du véhicule sont alors lues par le dispositif comprenant l'« antenne fixation véhicule » (14) et une carte de contrôle et de communication RFID. Ces informations sont ensuite enregistrées dans un moyen de mémorisation situé dans le poste fixe (1). Ces informations sont ensuite transmises au bloc fonctionnel qui centralise et gère les différents postes fixes (1) d'une même station de stockage.

L'étiquette électronique (6) fonctionne avec un double accès, un premier accès, actif, lorsqu'elle est alimentée au niveau de l'élément de verrouillage embarqué (1) et qu'elle réceptionne les informations fournies par la carte de contrôle (7) et un second accès, passif, lorsque l'étiquette est lue par le dispositif de lecture du poste de verrouillage fixe (1).

Le bloc fonctionnel, comme les postes fixes (1) qui se rattachent à lui, est une structure scellée au sol, blindé, munie d'un dispositif d'alarme qui se déclenche en cas d'effraction et reliée à une alimentation électrique souterraine tout en disposant d'un générateur de secours autonome de type UPS. Le bloc fonctionnel comprend aussi un moyen de pilotage automatique des différents postes fixes (1) de la station de stockage. La communication entre le bloc fonctionnel et les postes fixes (1) se réalise par un réseau de câblage externe ou souterrain et permet la récupération de donnée de mesures et/ou d'utilisation depuis les différents postes fixes (1) occupés par des véhicules (0). Les informations transmises par les postes fixes (1) sont alors enregistrées dans un moyen de mémorisation pour pouvoir être communiquée à une unité central située à distance. Cette communication s'effectuant généralement par système GPRS.

Le bloc fonctionnel forme aussi une borne centrale à la station de stockage fournissant une interface avec l'usager pour louer un véhicule. Le bloc fonctionnel comprend alors un dispositif d'identification de l'usager qui peut être associé à un dispositif de payement, ainsi qu'un dispositif d'attribution d'un véhicule stationné et verrouillé sur un poste fixe, ce dispositif d'attribution étant relié au dispositif de pilotage. L'interface avec l'usager est aussi reliée au dispositif d'attribution pour permettre à l'usager de pouvoir modifier l'attribution du véhicule. Ceci permet d'éviter l'attribution d'un véhicule mis hors d'état de fonctionnement alors qu'il était verrouillé.

Le procédé de fonctionnement de l'invention pour le verrouillage d'un véhicule muni d'un élément embarqué (2) sur un poste fixe (1) comprend :
- une étape de positionnement de la saillie (3) de l'élément embarqué (2) dans le logement (4) du poste fixe (1),
- une étape de détection de la présence de l'étiquette électronique (6) par l'antenne dite « antenne fixation véhicule » (14),
- une étape de détection de la présence de la clé (12) par l'antenne dite « antenne clé antivol » (15),
   - une étape d'activation, par un dispositif de contrôle, de la commande d'actionnement du verrouillage de l'élément de verrouillage embarqué (2) sur le poste fixe (1),
   - une étape de verrouillage de l'élément de verrouillage embarqué (2) par le véhicule sur le poste fixe (1).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de stockage de véhicules (0) comprenant:
• au moins un premier poste de verrouillage fixe (1),
• un bloc fonctionnel (16) configuré pour gérer plusieurs postes de verrouillage fixes (1) y compris le premier poste de verrouillage fixe (1) et,
• au moins un élément de verrouillage embarqué (2) sur un véhicule (0), l'élément de verrouillage embarqué (2) comprenant un corps (2), une saillie (3), une étiquette électronique (6) intégrée à l'intérieur de la saillie (3) et un capteur de surveillance de l'intégrité de l'élément de verrouillage embarqué (2) et au moins un moyen de mémorisation de l'état de l'élément embarqué,
l'étiquette électronique (6) comprenant au moins un composant RFID et différents registres mémoire dont entre autres un registre comprenant un élément d'identification du véhicule (0), un registre comprenant un élément de signalement dans le cas d'une tentative d'effraction altérant le fonctionnement de l'élément embarqué ainsi qu'un registre comprenant des mesures d'au moins un capteur (9) de surveillance situé sur un organe du véhicule (0),
le premier poste de verrouillage fixe (1) comprenant :
• un logement (4) du premier poste de verrouillage (1) destiné à recevoir la saillie (3) de l'élément de verrouillage embarqué (2) sur le véhicule (0),
• un moyen de verrouillage (5) adapté pour coopérer avec la saillie (3) de l'élément de verrouillage embarqué (2) sur le véhicule (0),
• un moyen d'actionnement du moyen de verrouillage (5) activé et désactivé par un dispositif d'activation,
• un dispositif de lecture de l'étiquette électronique (6) de l'élément de verrouillage embarqué (2) qui comprend au moins un contrôleur de communication RFID (13) relié à une antenne dite antenne fixation véhicule (14) pour détecter et lire l'étiquette électronique (6) portée par le véhicule (0), le dispositif de lecture de l'étiquette électronique (6) étant relié au dispositif d'activation du moyen de verrouillage (5), **caractérisé en ce que** le dispositif de lecture de l'étiquette électronique (6) définit un espace de lecture, dans lequel l'étiquette électronique (6) vient se positionner lors de l'amenée de la saillie (3) de l'élément de verrouillage embarqué (2) à proximité du logement de verrouillage, l'antenne (14) étant positionnée dans le premier poste fixe de façon à former un espace de lecture correspondant sensiblement à l'espace formé par le logement (4) situé dans le premier poste de verrouillage (1)
et **en ce que** le premier poste de verrouillage fixe (1) est configuré pour verrouiller le véhicule (0) une fois le véhicule (0) identifié par la lecture du registre d'identification du véhicule (0) de l'étiquette électronique (6) quand le moyen d'actionnement du moyen de verrouillage est activé par le dispositif d'activation, parle rabattement du moyen de verrouillage (5) bloquant la sortie de la saillie (3) du logement (4), pour qu' ensuite le dispositif de lecture lise les informations récoltées par l'étiquette électronique (6) au cours de l'utilisation du véhicule, et enregistre ensuite dans un moyen de mémorisation situé dans le premier poste de verrouillage fixe (1) les informations lues par le dispositif de lecture avant de les transmettre au bloc fonctionnel (16).

2. Système de stockage de véhicules selon la revendication 1, **caractérisé en ce que** l'élément de verrouillage embarqué (2) comprend au moins :
- une carte de contrôle électronique (7) relié à l'étiquette électronique (6) RFID intégrée à la saillie (3),
- un capteur de mesure du nombre de tours (9a) relié à un accéléromètre (7a) intégré à la carte de contrôle électronique (7) et au moins un moyen de mémorisation du nombre de tours mesuré.

3. Système de stockage de véhicules selon la revendication 2, **caractérisé en ce que** l'élément de verrouillage embarqué (2) comprend au moins :
- le capteur (9) de surveillance d'un organe du véhicule (0) et relié à la carte de contrôle électronique (6), et au moins un moyen de mémorisation de l'état d'un organe surveillé,
- une source d'alimentation (11) reliée à la carte de contrôle électronique (6) pour alimenter la carte de contrôle et au moins un capteur,
- un capteur de surveillance de la source d'alimentation (11) relié à la carte de contrôle électronique (7) et au moins un moyen de mémorisation de l'état de la source d'alimentation surveillée

4. Système de stockage de véhicules selon une des revendications 2 ou 3, **caractérisé en ce que** l'étiquette électronique (6) située sur l'élément de verrouillage embarqué (2), présente un double accès, un premier accès, actif, où, alimentée par le dispositif d'alimentation embarqué (11), l'étiquette électronique (6) réceptionne les informations fournies par la carte de contrôle embarquée (7) et un second accès, passif, où l'étiquette (6) est lue par le dispositif de lecture du premier poste de verrouillage fixe (1).

5. Système de stockage de véhicules selon une des revendications précédentes, **caractérisé en ce qu'**un câble souple formant un antivol, présente une extrémité fixée au véhicule (0) et une autre extrémité, libre, intégrant un moyen de verrouillage et coopérant avec l'élément de verrouillage embarqué (2).

6. Système de stockage de véhicules selon la revendication 5, **caractérisé en ce que** le moyen de verrouillage intégré à l'extrémité libre du câble présente une clé (12) intégrant un composant RF (12a), cette clé (12) se trouvant positionnée au niveau de la saillie (3) de l'élément de verrouillage embarqué (2) lorsque l'antivol n'est pas utilisé.

7. Système de stockage de véhicules selon la revendication 6, **caractérisé en ce que** le premier poste de verrouillage (1) présente une seconde antenne RFID, appelée « antenne clé antivol » (15), reliée au contrôleur RFID (13), lui- même relié au dispositif d'activation du moyen de verrouillage (5), l'« antenne clé antivol » (15), couvrant un espace de lecture correspondant sensiblement à l'espace occupé par le logement (4) destiné à recevoir la saillie (3) de l'élément de verrouillage embarqué (2), pour permettre le contrôle de la présence de la clé (12), grâce au composant RF (12a) intégré dans la clé (12), lors du verrouillage de l'organe de verrouillage embarqué (2) sur le premier poste de verrouillage (1).

8. Système de stockage de véhicules selon la revendication 7, **caractérisé en ce qu'**un dispositif de contrôle compris dans le premier poste de verrouillage (1) et relié à la carte de contrôle et de communication RFID (13) ne permet le verrouillage de l'élément de verrouillage embarqué (2) sur le premier poste de verrouillage qu'une fois l'identification de l'étiquette électronique (6) et de la clé (12) réalisée.

9. Système de stockage de véhicules selon une des revendications précédentes, **caractérisé en ce qu'**un dispositif de contrôle, compris dans le premier poste de verrouillage (1) et relié à la carte de contrôle et de communication RFID (13), ne permet la lecture des informations comprises dans l'étiquette électronique (6) qu'une fois l'étiquette électronique (6) identifiée.

10. Système de stockage de véhicules selon une des revendications précédentes, **caractérisé en ce que** la saillie (3) de l'élément de verrouillage embarqué (2) sur le verrouillage, est sensiblement cylindrique et présente à son extrémité une proéminence (3a) de diamètre supérieur au diamètre du corps (3b) de la saillie (3), et **en ce que** le logement (4) du poste de verrouillage (1) destiné à recevoir la saillie (3) présente, sur la face en regard du véhicule (0), une gorge (4a), orientée dans un plan parallèle au déplacement du véhicule (0), dont une extrémité est de largeur sensiblement supérieur au diamètre de la saillie (3) et inférieur au diamètre de la proéminence (3a), l'autre extrémité de la gorge (4a) étant ouverte au niveau d'une face du logement (4) permettant l'introduction de la proéminence (4a) dans le logement (4), de sorte que la saillie (3) étant orientée selon un axe perpendiculaire au plan de la face située en regard du véhicule (0) verrouillé, la saillie (3) introduit son extrémité supportant la proéminence (3a) dans le logement (4) en coulissant parallèlement au déplacement du véhicule (0), dans le plan perpendiculaire à l'axe de la saillie (3) pour que le corps (3b) de la saillie (3) vienne s'insérer dans le creux de la gorge (4a).

11. Système de stockage de véhicules selon la revendication 10, **caractérisé en ce que** le verrouillage est effectué par un clapet (5) qui se referme sur le corps (3b) de la saillie (3) introduit dans la gorge (4a) de la face du logement (4) située en regard du véhicule (0) verrouillé.

12. Système de stockage de véhicules selon une des revendications précédentes, **caractérisé en ce que** le système de stockage comprend un bloc fonctionnel (16), ce bloc fonctionnel (16) comprenant au moins :
une alimentation électrique souterraine et un générateur de type UPS,
- un dispositif de pilotage de plusieurs postes fixes (1) de verrouillage relié à chaque poste fixe (1) de verrouillage par un réseau de câbles externes ou souterrains,
- un dispositif d'identification de l'usager, un dispositif d'attribution d'un véhicule (0) stationné et verrouillé sur un poste fixe (1), ce dispositif étant relié au dispositif de pilotage,
- un moyen de communication permettant la récupération de données d'utilisation ou de mesure depuis plusieurs postes fixes (1) de verrouillage occupés chacun par un véhicule (0),
- un moyen de mémorisation permettant l'enregistrement des données récupérées,
- un moyen de communication permettant la transmission de données entre le dispositif de pilotage et une unité centrale située à distance,
une sirène d'alarme reliée à un dispositif anti-effraction intégré au dispositif de pilotage.

13. Système de stockage de véhicules selon la revendication 12, **caractérisé en ce que** le bloc fonctionnel (16) comprend une interface avec l'usager relié au dispositif d'attribution permettant à l'usager de modifier l'attribution du véhicule.

14. Système de stockage de véhicules selon une des revendications précédentes, **caractérisé en ce que** le poste de verrouillage (1) étant disposé dans un boîtier blindé, il comprend :
un moyen de mémorisation permettant l'enregistrement des données lues sur l'étiquette électronique,
une alimentation électrique souterraine et un générateur de type UPS,
un dispositif d'alarme répondant à une tentative d'effraction.

15. Procédé de verrouillage d'un véhicule sur un premier poste de verrouillage fixe (1) selon la revendication 1, le procédé comprenant
- une étape de positionnement de la saillie (3) de l'élément embarqué (2) dans un logement (4) du poste de verrouillage (1), le procédé est **caractérisé en ce qu'**il comprend :
- une étape de détection de la présence de l'étiquette électronique (6) par l'antenne dite « antenne fixation véhicule» (14),
- une étape d'activation, par un contrôleur de communication RFID (13), de la commande d'actionnement du verrouillage de l'élément de verrouillage embarqué (2) sur le poste fixe (1),
- une étape de verrouillage de l'élément de verrouillage embarqué (2) par le véhicule sur le poste fixe (1),
- une étape de lecture des informations fournies par l'étiquette électronique (6), cette lecture étant réalisée par la carte de contrôle et communication RFID (13) via l'antenne dite «antenne fixation véhicule » (14£),
une étape d'identification du véhicule par la lecture du registre d'identification de l'étiquette électronique du véhicule,
- une étape de mémorisation des informations lues,
- une étape de transmission des informations mémorisées depuis le premier poste de verrouillage fixe (1) vers un bloc fonctionnel de pilotage commun à plusieurs postes de verrouillage..

16. Procédé de verrouillage d'un véhicule sur un poste de verrouillage fixe selon la revendication 15, le poste de verrouillage (1) comprenant la carte de contrôle et de communication RFID (13) reliée à une antenne dite « antenne clé antivol» (15) et l'élément de verrouillage (2) solidaire du véhicule (0) comprenant un antivol à clé (12), dont la clé (12), intégrant un composant RF (12a), se trouve positionnée au niveau de la saillie (3) de l'élément de verrouillage embarqué (2) lorsque l'antivol n'est pas utilisé, le procédé est **caractérisé en ce qu'**il comprend une étape de détection de la présence de la clé (12) par l'antenne dite « antenne clé antivol) » (15), cette étape précédent l'étape d'émission, par un dispositif de contrôle (13), d'une autorisation de verrouillage.

## Patentansprüche

1. *Fahrzeugaufbewahrungssystem (0), das Folgendes umfasst:*
• *wenigstens eine feste Verriegelungsstation (1),*
• *einen Funktionsblock (16), konfiguriert zum Verwalten mehrerer fester Verriegelungsstationen (1) einschließlich der ersten festen Verriegelungsstation (1), und*
• *wenigstens ein Bordverriegelungselement (2) an einem Fahrzeug (0), wobei das Bordverriegelungselement (2) einen Körper (2), eine Auskragung (3), ein im Innern der Auskragung (3) integriertes elektronisches Etikett (6) und einen Sensor zum Überwachen der Integrität des Bordverriegelungselements (2) und wenigstens ein Mittel zum Speichern des Zustands des Bordelements umfasst,*
*wobei das elektronische Etikett (6) wenigstens eine RFID-Komponente und unterschiedliche Speicherregister umfasst, von denen ein Register, das ein Element zum Identifizieren des Fahrzeugs (0) umfasst, ein Register, das ein Signalisierungselement für den Fall eines Einbruchsversuchs umfasst, das die Funktion des Bordelements verändert, sowie ein Register, das Messwerte von wenigstens einem an einem Mechanismus des Fahrzeugs (0) befindlichen Überwachungssensor (9) umfasst,*
*wobei die erste feste Verriegelungsstation (1) Folgendes umfasst:*
• *eine Aufnahme (4) für die erste Verriegelungsstation (1), bestimmt zum Aufnehmen der Auskragung (3) des Bordverriegelungselements (2) an dem Fahrzeug (0),*
• *ein Verriegelungsmittel (5), ausgelegt zum Zusammenwirken mit der Auskragung (3) des Bordverriegelungselements (2) an dem Fahrzeug* (0),
• *ein Mittel zum Bedienen des Verriegelungsmittels (5), aktiviert und deaktiviert durch eine Aktivierungsvorrichtung,*
• *eine Vorrichtung zum Lesen des elektronischen Etiketts (6) des Bordverriegelungselements (2), das wenigstens eine RFID-Kommunikationssteuerung (13) umfasst, verbunden mit einer Fahrzeugbefestigungsantenne (14) genannten Antenne, zum Erkennen und Lesen des von dem Fahrzeug (0) getragenen elektronischen Etiketts (6), wobei die Vorrichtung zum Lesen des elektronischen Etiketts (6) mit der Aktivierungsvorrichtung des Verriegelungsmittels (5) verbunden ist,*
***dadurch gekennzeichnet, dass** die Vorrichtung zum Lesen des elektronischen Etiketts (6) einen Leseraum definiert, in dem das elektronische Etikett (6) positioniert wird, während die Auskragung (3) des Bordverriegelungselements (2) in die Nähe der Verriegelungsaufnahme gebracht wird, wobei die Antenne (14) in der ersten festen Station auf eine solche Weise positioniert ist, dass ein Leseraum entsteht, der im Wesentlichen dem durch die Aufnahme (4) gebildeten Raum entspricht, der sich in der ersten Verriegelungsstation (1) befindet,*
*und dadurch, dass die erste feste Verriegelungsstation (1) zum Verriegeln des Fahrzeugs (0) nach dem Identifizieren des Fahrzeugs (0) durch Lesen des Identifikationsregisters des Fahrzeugs (0) auf dem elektronischen Etikett (6) konfiguriert ist, wenn das Mittel zum Bedienen des Verriegelungsmittels von der Aktivierungsvorrichtung aktiviert wird, durch Umklappen des Verriegelungsmittels (5), um den Ausgang der Auskragung (3) der Aufnahme (4) zu versperren, damit die Lesevorrichtung dann die von dem elektronischen Etikett (6) gewonnenen Informationen im Laufe der Benutzung des Fahrzeugs liest und dann in einem in der ersten festen Verriegelungsstation (1) befindlichen Speichermittel die Informationen speichert, die von der Lesevorrichtung gelesen werden, bevor sie zum Funktionsblock (16) übertragen werden.*

2. *Fahrzeugaufbewahrungssystem nach Anspruch* 1, ***dadurch gekennzeichnet, dass** das Bordverriegelungselement (2) wenigstens Folgendes umfasst:*
- *eine elektronische Steuerkarte (7), die mit dem in der Auskragung (3) integrierten elektronischen RFID-Etikett (6) verbunden ist,*
- *einen Sensor zum Messen der Drehzahl (9a) in Verbindung mit einem Beschleunigungsmesser (7a), integriert in die elektronische Steuerkarte (7), und wenigstens ein Mittel zum Speichern der gemessenen Drehzahl.*

3. *Fahrzeugaufbewahrungssystem nach Anspruch 2, **dadurch gekennzeichnet, dass** das Bordverriegelungselement (2) wenigstens Folgendes umfasst:*
- *den Sensor (9) zum Überwachen eines Mechanismus des Fahrzeugs (0), verbunden mit der elektronischen Steuerkarte (7), und wenigstens ein Mittel zum Speichern des Zustands eines überwachten Mechanismus,*
- *eine Versorgungsquelle (11), verbunden mit der elektronischen Steuerkarte (7), um die Steuerkarte und wenigstens einen Sensor zu versorgen,*
- *einen Sensor zum Überwachen der Versorgungsquelle (11), verbunden mit der elektronischen Steuerkarte (7), und wenigstens ein Mittel zum Speichern des Zustands der überwachten Versorgungsquelle.*

4. *Fahrzeugaufbewahrungssystem nach Anspruch 2 oder 3, **dadurch gekennzeichnet, dass** das an dem Bordverriegelungselement (2) befindliche elektronische Etikett (6) einen doppelten Zugang aufweist, einen ersten, aktiven Zugang, in dem das elektronische Etikett (6), versorgt durch die Bordversorgungsvorrichtung (11), die von der Bordsteuerkarte (7) gelieferten Informationen empfängt, und einen zweiten, passiven Zugang, in dem das Etikett (6) von der Vorrichtung zum Lesen der ersten festen Verriegelungsstation (1) gelesen wird.*

5. *Fahrzeugaufbewahrungssystem nach einem der vorherigen Ansprüche, **dadurch gekennzeichnet, dass** ein elastisches Kabel, das eine Diebstahlsicherung bildet, ein am Fahrzeug (0) befestigtes Ende und ein anderes, freies Ende hat, das ein Verriegelungsmittel integriert und mit dem Bordverriegelungselement (2) zusammenwirkt.*

6. *Fahrzeugaufbewahrungssystem nach Anspruch 5, **dadurch gekennzeichnet, dass** das am freien Ende des Kabels integrierte Verriegelungsmittel einen Schlüssel (12) aufweist, der eine RF-Komponente (12a) integriert, wobei dieser Schlüssel (12) an der Auskragung (3) des Bordverriegelungselements (2) positioniert ist, wenn die Diebstahlsicherung nicht benutzt wird.*

7. *Fahrzeugaufbewahrungssystem nach Anspruch 6, **dadurch gekennzeichnet, dass** die erste Verriegelungsstation (1) eine "Diebstahlsicherungsschlüssel-Antenne" (15) genannte zweite RFID-Antenne aufweist, verbunden mit der RFID-Steuerung (13), die wiederum mit der Aktivierungsvorrichtung des Verriegelungsmittels (5) verbunden ist, wobei die "Diebstahlsicherungsschlüssel-Antenne" (15) einen Leseraum bedeckt, der im Wesentlichen dem Raum entspricht, der von der Aufnahme (4) zum Aufnehmen der Auskragung (3) des Bordverriegelungselements (2) bestimmt ist, zum Zulassen der Steuerung der Anwesenheit des Schlüssels (12), dank der im Schlüssel (12) integrierten RF-Komponente (12a), während der Verriegelung des Bordverriegelungsmechanismus (2) an der ersten Verriegelungsstation (1).*

8. *Fahrzeugaufbewahrungssystem nach Anspruch 7, **dadurch gekennzeichnet, dass** eine Steuervorrichtung, die in der ersten Verriegelungsstation (1) enthalten und mit der Steuer- und RFID-Kommunikationskarte (13) verbunden ist, eine Verriegelung des Bordverriegelungselements (2) an der ersten Verriegelungsstation nur im Falle der Identifikation des elektronischen Etiketts (6) und des Schlüssels (12) zulässt.*

9. *Fahrzeugaufbewahrungssystem nach einem der vorherigen Ansprüche, **dadurch gekennzeichnet, dass** eine Steuervorrichtung, die in der ersten Verriegelungsstation (1) enthalten und mit der Steuer- und RFID-Kommunikationskarte (13) verbunden ist, das Lesen der in dem elektronischen Etikett (6) enthaltenen Informationen nur im Falle eines identifizierten elektronischen Etiketts (6) zulässt.*

10. *Fahrzeugaufbewahrungssystem nach einem der vorherigen Ansprüche, **dadurch gekennzeichnet, dass** die Auskragung (3) des Bordverriegelungselements (2) an der Verriegelung im Wesentlichen zylindrisch ist und an ihrem Ende einen Vorsprung (3a) mit einem Durchmesser aufweist, der größer ist als der Durchmesser des Körpers (3b) der Auskragung (3), und dadurch, dass die Aufnahme (4) der zum Aufnehmen der Auskragung (3) bestimmten Verriegelungsstation (1) an der Fläche gegenüber dem Fahrzeug (0) eine Auskehlung (4a) aufweist, die in einer Ebene parallel zur Bewegung des Fahrzeugs (0) orientiert ist, deren Ende eine Breite hat, die wesentlich größer als der Durchmesser der Auskragung (3) und kleiner als der Durchmesser des Vorsprungs (3a) ist, wobei das andere Ende der Auskehlung (4a) an einer Fläche der Aufnahme (4) offen ist, die das Einführen des Vorsprungs (4a) in die Aufnahme (4) zulässt,* so *dass, da die Auskragung (3) gemäß einer Achse lotrecht zur Ebene der gegenüber dem verriegelten Fahrzeug (0) befindlichen Fläche orientiert ist, die Auskragung (3) ihr Ende einführt und den Vorsprung (3a) in der Aufnahme (4) durch Gleiten parallel zur Bewegung des Fahrzeugs (0) abstützt, in der Ebene lotrecht zur Achse der Auskragung (3),* so *dass der Körper (3b) der Auskragung (3) in den Hohlraum der Auskehlung (4a) eingeführt wird.*

11. *Fahrzeugaufbewahrungssystem nach Anspruch 10, **dadurch gekennzeichnet, dass** die Verriegelung durch ein Ventil (5) bewirkt wird, das sich am Körper (3b) der Auskragung (3) schließt, eingeführt in die Auskehlung (4a) der Fläche der Aufnahme (4), die sich gegenüber dem verriegelten Fahrzeug (0) befindet.*

12. *Fahrzeugaufbewahrungssystem nach einem der vorherigen Ansprüche, **dadurch gekennzeichnet, dass** das Aufbewahrungssystem einen Funktionsblock (16) umfasst, wobei dieser Funktionsblock (16) wenigstens Folgendes umfasst:*
- *eine unterirdische Stromversorgung und einen Generator des USV-Typs,*
- *eine Vorrichtung zum Steuern mehrerer fester Verriegelungsstationen (1), durch ein externes oder unterirdisches Kabelnetz mit jeder festen Verriegelungsstation (1) verbunden,*
- *eine Vorrichtung zum Identifizieren des Benutzers, eine Vorrichtung zum Zuordnen eines geparkten und an einer festen Station (1) verriegelten Fahrzeugs (0), wobei diese Vorrichtung mit der Steuervorrichtung verbunden ist,*
- *ein Kommunikationsmittel, das die Wiederherstellung von Nutzungs- und Messdaten von mehreren festen Verriegelungsstationen (1) zulässt, die jeweils mit einem Fahrzeug (0) belegt sind,*
- *ein Speichermittel, das die Registrierung der wiederhergestellten Daten zulässt,*
- *ein Kommunikationsmittel, das die Übertragung von Daten zwischen der Steuervorrichtung und einer entfernt befindlichen Zentraleinheit zulässt,*
- *eine Alarmsirene, die mit einer an der Steuervorrichtung integrierten Diebstahlsicherungsvorrichtung verbunden ist.*

13. *Fahrzeugaufbewahrungssystem nach Anspruch 12, **dadurch gekennzeichnet, dass** der Funktionsblock (16) eine Schnittstelle mit dem Benutzer umfasst, verbunden mit der Zuordnungsvorrichtung, so dass der Benutzer die Zuordnung des Fahrzeugs verändern kann.*

14. *Fahrzeugaufbewahrungssystem nach einem der vorherigen Ansprüche, **dadurch gekennzeichnet, dass** die Verriegelungsstation (1) in einem gepanzerten Kasten angeordnet ist und Folgendes umfasst:*
*ein Speichermittel, das die Registrierung von auf dem elektronischen Etikett gelesenen Daten zulässt,*
*eine unterirdische Stromversorgung und einen Generator des USV-Typs,*
*eine Alarmvorrichtung, die auf einen Einbruchsversuch anspricht.*

15. *Verfahren zum Verriegeln eines Fahrzeugs an einer ersten festen Verriegelungsstation (1) nach Anspruch 1, wobei das Verfahren Folgendes beinhaltet:*
- *einen Schritt des Positionierens der Auskragung (3) des Bordelements (2) in einer Aufnahme (4) der Verriegelungsstation (1), wobei das Verfahren **dadurch gekennzeichnet ist, dass** es Folgendes beinhaltet:*
- *einen Schritt des Erkennens der Anwesenheit des elektronischen Etiketts (6) anhand der* "*Fahrzeugbefestigungsantenne*" *(14) genannten Antenne,*
- *einen Schritt des Aktivierens, durch eine RFID-Kommunikationssteuerung (13), des Befehls zum Bedienen der Verriegelung des Bordverriegelungselements (2) an der festen Station* (1),
- *einen Schritt des Verriegelns des Bordverriegelungselements (2) durch das Fahrzeug an der festen Station (1),*
- *einen Schritt des Lesens der von dem elektronischen Etikett (6) gelieferten Informationen, wobei dieses Lesen durch die Steuer- und RFID-Kommunikationskarte (13) über die* "*Fahrzeugbefestigungsantenne*" *(14) genannte Antenne erfolgt,*
- *einen Schritt des Identifizierens des Fahrzeugs durch das Lesen des Registers zum Identifizieren des elektronischen Etiketts des Fahrzeugs,*
- *einen Schritt des Speicherns der gelesenen Informationen,*
- *einen Schritt des Übertragens der gespeicherten Informationen von der ersten festen Verriegelungsstation (1) zu einem mit mehreren Verriegelungsstationen gemeinsamen Steuerungsfunktionsblock.*

16. *Verfahren zum Verriegeln eines Fahrzeugs an einer festen Verriegelungsstation nach Anspruch 15, wobei die Verriegelungsstation (1) Folgendes umfasst: die Steuer- und RFID-Kommunikationskarte (13), verbunden mit einer "Diebstahlsicherungsschlüssel-Antenne" (15) genannten Antenne, und das fest mit dem Fahrzeug (0) verbundene Verriegelungselement (2), das eine Schlüssel-Diebstahlsicherung (12) umfasst, deren Schlüssel (12) eine RF-Komponente (12a) enthält, die an der Auskragung (3) des Bordverriegelungselements (2) positioniert ist, wenn die Diebstahlsicherung nicht benutzt wird, wobei das Verfahren **dadurch gekennzeichnet ist, dass** es einen Schritt des Erkennens der Anwesenheit des Schlüssels (12) durch die "Diebstahlsicherungsschlüssel-Antenne" (15) genannte Antenne beinhaltet, wobei dieser Schritt dem Sendeschritt, durch eine Steuervorrichtung (13), einer Verriegelungsautorisierung vorangeht.*

## Claims

1. System for the storage of vehicles (0) comprising:
- at least one fixed locking station (1),
- a functional block (16) configured to manage a plurality of fixed locking stations (1) including the first fixed locking station (1) and
- at least one locking element (2) on board a vehicle (0), the on-board locking element (2) comprising a body (2), a projection (3), an electronic tag (6) integrated inside the projection (3) and a sensor for monitoring the integrity of the on-board locking element (2) and at least one means for storing the state of the on-board element,
the electronic tag (6) comprising at least one RFID component and various memory registers including, inter alia, a register comprising an element for identification of the vehicle (0), a register comprising an element for signalling in the case of an attempted break-in which alters the functioning of the on-board element as well as a register comprising measurements of at least one monitoring sensor (9) situated on a component of the vehicle (0),
the first fixed locking station (1) comprising:
- a housing (4) of the first locking station (1) designed to receive the projection (3) of the locking element (2) which is on board the vehicle (0),
- a locking means (5) adapted to cooperate with the projection (3) of the locking element (2) which is on board the vehicle (0),
- a means for actuating the locking means (5) activated and deactivated by an activation device,
- a device for reading the electronic tag (6) of the on-board locking element (2) which comprises at least one RFID communication controller (13) connected to an antenna called a vehicle fixing antenna (14) for detecting and reading the electronic tag (6) carried by the vehicle (0), the device for reading the electronic tag (6) being connected to the device for activation of the locking means (5),
**characterised in that** the device for reading the electronic tag (6) defines a reading space in which the electronic tag (6) positions itself when the projection (3) of the on-board locking element (2) is brought into the vicinity of the locking housing, the antenna (14) being positioned in the first fixed station so as to form a reading space substantially corresponding to the space formed by the housing (4) situated in the first locking station (1),
and **in that** the first fixed locking station (1) is configured to lock the vehicle (0) once the vehicle (0) is identified by reading of the vehicle (0) identification register of the electronic tag (6) when the means for actuating the locking means is activated by the activation device, by retraction of the locking means (5) preventing the projection (3) from emerging from the housing (4), so that then the reading device reads the information gathered by the electronic tag (6) during use of the vehicle, and then records in a storage means situated in the first fixed locking station (1) the information read by the reading device before transmitting it to the functional block (16).

2. Vehicle storage system according to claim 1, **characterised in that** the on-board locking element (2) comprises at least:
- an electronic control card (7) connected to the RFID electronic tag (6) integrated in the projection (3),
- a sensor for measuring the number of revolutions (9a) connected to an accelerometer (7a) integrated in the electronic control card (7) and at least one means for storing the number of revolutions measured.

3. Vehicle storage system according to claim 2, **characterised in that** the on-board locking element (2) comprises at least:
- the sensor (9) for monitoring a component of the vehicle (0), connected to the electronic control card (6), and at least a means for storing the state of a monitored component,
- a power supply (11) connected to the electronic control card (6) for supplying the control card and at least a sensor,
- a sensor for monitoring the power supply (11), connected to the electronic control card (7), and at least a means for storing the state of the monitored power supply.

4. Vehicle storage system according to one of claims 2 or 3,
**characterised in that** the electronic tag (6) situated on the on-board locking element (2) has dual access, a first, active access where, supplied by the on-board power supply (11), the electronic tag (6) receives the information provided by the on-board control card (7), and a second, passive access where the tag (6) is read by the reading device of the first fixed locking station (1).

5. Vehicle storage system according to one of the preceding claims, **characterised in that** a flexible cable forming anti-theft means has one end fixed to the vehicle (0) and another, free end integrating a locking means and cooperating with the on-board locking element (2).

6. Vehicle storage system according to claim 5, **characterised in that** the locking means integrated in the free end of the cable has a key (12) integrating an RF component (12a), this key (12) being positioned at the level of the projection (3) of the on-board locking element (2) when the anti-theft means is not in use.

7. Vehicle storage system according to claim 6, **characterised in that** the first locking station (1) has a second RFID antenna, called an "anti-theft key antenna" (15), connected to the RFID controller (13), which is itself connected to the device for activation of the locking means (5), the "anti-theft key antenna" (15) covering a reading space which substantially corresponds to the space occupied by the housing (4) designed to receive the projection (3) of the on-board locking element (2), in order to allow checking of the presence of the key (12), owing to the RF component (12a) integrated in the key (12), upon locking of the on-board locking component (2) to the first locking station (1).

8. Vehicle storage system according to claim 7, **characterised in that** a control device included in the first locking station (1) and connected to the RFID communication and control card (13) does not allow locking of the on-board locking element (2) to the first locking station until identification of the electronic tag (6) and of the key (12) has been performed.

9. Vehicle storage system according to one of the preceding claims, **characterised in that** a control device included in the first locking station (1) and connected to the RFID communication and control card (13) does not allow reading of the information included in the electronic tag (6) until the electronic tag (6) is identified.

10. Vehicle storage system according to one of the preceding claims, **characterised in that** the projection (3) of the locking element (2) which is on board the locking system is substantially cylindrical and at its end has a protuberance (3a) having a diameter greater than the diameter of the body (3b) of the projection (3), and **in that** the housing (4) of the locking station (1) designed to receive the projection (3) has, in the face opposite the vehicle (0), a groove (4a) oriented in a plane parallel to the travel of the vehicle (0), of which one end has a width substantially greater than the diameter of the projection (3) and smaller than the diameter of the protuberance (3a), the other end of the groove (4a) being open at the level of a face of the housing (4) allowing introduction of the protuberance (4a) into the housing (4), so that, the projection (3) being oriented along an axis perpendicular to the plane of the face situated opposite the locked vehicle (0), the projection (3) introduces its end supporting the protuberance (3a) into the housing (4) by sliding parallel to the travel of the vehicle (0), in the plane perpendicular to the axis of the projection (3) so that the body (3b) of the projection (3) is inserted in the hollow of the groove (4a).

11. Vehicle storage system according to claim 10, **characterised in that** locking is carried out by a valve (5) which closes onto the body (3b) of the projection (3) introduced into the groove (4a) in the face of the housing (4) situated opposite the locked vehicle (0).

12. Vehicle storage system according to one of the preceding claims, **characterised in that** the storage system comprises a functional block (16), this functional block (16) comprising at least:
an underground power supply and a generator of the UPS type,
- a device for managing a plurality of fixed locking stations (1), connected to each fixed locking station (1) by a network of external or underground cables,
- a user identification device, a device for allocating a vehicle (0) which is parked and locked to a fixed station (1), this device being connected to the managing device,
- a communication means allowing the recovery of use or measurement data from a plurality of fixed locking stations (1) each occupied by a vehicle (0),
- a storage means allowing the recovered data to be recorded,
- a communication means allowing the transmission of data between the managing device and a central unit situated at a distance,
an alarm siren connected to an anti-break-in device integrated in the managing device.

13. Vehicle storage system according to claim 12, **characterised in that** the functional block (16) comprises an interface with the user connected to the allocation device allowing the user to modify allocation of the vehicle.

14. Vehicle storage system according to one of the preceding claims, **characterised in that**, the locking station (1) being disposed in a shielded housing, it comprises:
a storage means allowing recording of the data read on the electronic tag,
an underground power supply and a generator of the UPS type,
an alarm device responding to an attempted break-in.

15. Method for locking a vehicle to a first fixed locking station (1) according to claim 1, the method comprising
- a step of positioning the projection (3) of the on-board element (2) in a housing (4) of the locking station (1), the method is **characterised in that** it comprises:
- a step of detection of the presence of the electronic tag (6) by the antenna called the "vehicle fixing antenna" (14),
- a step of activation, by an RFID communication controller (13), of the means for controlling actuation of locking of the on-board locking element (2) to the fixed station (1),
- a step of locking of the on-board locking element (2) by the vehicle to the fixed station (1),
- a step of reading of the information provided by the electronic tag (6), this reading being performed by the RFID communication and control card (13) via the antenna called the "vehicle fixing antenna" (14),
a step of identification of the vehicle by reading of the identification register of the electronic tag of the vehicle,
- a step of storage of the information read,
- a step of transmission of the stored information from the first fixed locking station (1) to a managing functional block common to a plurality of locking stations.

16. Method for locking a vehicle to a first fixed locking station (1) according to claim 15, the locking station (1) comprising the RFID communication and control card (13) connected to an antenna called an "anti-theft key antenna" (15), and the locking element (2) integral with the vehicle (0) comprising an anti-theft means with key (12), of which the key (12), integrating an RF component (12a), is positioned at the level of the projection (3) of the on-board locking element (2) when the anti-theft means is not in use, the method is **characterised in that** it comprises a step of detection of the presence of the key (12) by the antenna called the "anti-theft key antenna" (15), this step preceding the step of issue, by a control device (13), of authorisation for locking.
